# EUROPEAN PATENT SPECIFICATION

(11) **EP 1 157 524 B1**
(45) Date of publication and mention of the grant of the patent: **19.12.2007**
(21) Application number: 00912123.7
(22) Date of filing: 02.03.2000
(51) Int. Cl.: H04L 29/12

(54) **SCALABLE AND EFFICIENT DOMAIN NAME RESOLUTION**
SKALIERBARE UND EFFIZIENTE DOMAINNAMENAUFLÖSUNG
RESOLUTION DE NOM DE DOMAINE EFFICACE ET EVOLUTIVE

(30) Priority: 03.03.1999 US 124022 P
(43) Date of publication of application: 28.11.2001
(73) Proprietor: Ultradns, Inc., Danville, CA 94506 (US)
(72) Inventor: LACHMAN, Ronald, Northbrook, IL 60062 (US); HOTZ, Steve, Michael, Plya Del Ray, CA 90293 (US); MANNING, William, Carl, El Segundo, CA 90245 (US); PETERSON, Alec, Harkness, Lakewood, CO 80227 (US); HOTZ, Michael, Allen, Phoenix, AZ 85044 (US); JOFFE, Rodney, L., Phoenix, AZ 85028 (US)
(74) Representative: Lipscombe, Martin John
(86) International application number: PCT/US2000/005416
(87) International publication number: WO 2000/052594

(56) References cited:
- EP-A- 0 800 143
- EP-A- 0 817 444
- WO-A-99/09726
- WO-A-99/29083

## Description

A portion of the disclosure of this patent document contains material which is subject to copyright protection. The copyright owner has no objection to the facsimile reproduction by anyone of the patent document or the patent disclosure, as it appears in the Patent and Trademark Office patent file or records, but otherwise reserves all copyright rights whatsoever.

### BACKGROUND

### 1. FIELD OF THE INVENTION

This invention relates generally to enhanced domain name servers, and more particularly, to efficiently processing domain name queries in a network such as the Internet.

### 2. BACKGROUND

The Internet has brought about an information revolution through the development of computerized information resources, on-line services and the World Wide Web (WWW). The Internet is growing rapidly, with an ever increasing number of computers and users being connected to the Internet daily.

In order for devices (computers, printers, and the like) on a network such as the Internet to be able to communicate with each other, the devices need to know (or be able to determine) each others' addresses. Many distributive systems (e.g., the Internet) assign device names in the distributive system by a hierarchical naming scheme known as domain names. An Internet domain name is generally a sequence of domain labels separated by periods. For example, "a.ultradns.com" is a domain name where "com" is a top level domain name of a top level domain, "ultradns" is a second level domain name of a second level domain and "a" is a third level domain name of a third level domain. A device in a domain is labeled by the name of the device followed by the domain name. Thus, a device labeled "server" in the "a.ultradns.com" domain has the name, "server.a.ultradns.com". A device name is also referred to as a domain name. The Domain Name System (DNS) is a distributed hierarchical database comprised of client/server transaction servers that provide a mapping from domain names to associated information, e.g., to IP addresses.

While domain names partition a distributive system in a logical and hierarchical manner, messages are transferred between devices of the DNS by identifying devices using specific IP addresses. In the present Internet protocol, IP addresses are thirty-two-bit numbers that are expressed as four eight-bit values (i.e., four numbers in the range 0 to 255) separated by periods, e.g., "121.121.122.2". IP addresses contain information such as a network identifier ("ID") of a device network connection and a device ID. IP address are assigned by an address authority. The addresses are assigned in blocks to authoritative address servers.

A comprehensive description of the operation of domain name servers and IP addresses is given in *DNS and BIND In A Nutshell,* Paul Albitz and Cricket Liu, O'Reilly & Associates, 1994, ISBN: 1-56582-010-4, which is incorporated herein by reference.

IP addresses also relate to each other in a hierarchical manner. Thus, the DNS also provides a "reverse mapping" of IP addresses to domain names, by using a representation of the IP address that follows the DNS indexing model. However, the domain name hierarchy and the IP address hierarchy are not directly related to each other. While some name servers are also address servers, name and address servers do not have to be the same device. Thus, it is possible for a server to have authority to resolve a domain name into a corresponding IP address of a device, the same name server may not be able to resolve the IP address to the corresponding domain name of the same device. Thus, resolution of IP addresses to domain names follows a similar process as resolving domain names to IP addresses except different servers may be involved.

Because IP addresses are numerical and, unlike domain names, are assigned without regard to the logical and hierarchical organisation of the DNS, domain names are generally used in instructions for functions such as data transfers. Thus, a data transfer instruction identifies the receiving device by its domain name. However, the domain name must be translated into a corresponding IP address before the data transfer can occur.

Domain names are managed by authoritative devices called name servers. That is, domain name servers perform the task of converting names to IP addresses. Name servers translate domain names into corresponding IP addresses and vice versa. When a first device desires to transfer a message to a second device known only by its domain name, the first device must query a name server to acquire the corresponding IP address to the known domain name of the second device.

EP 0817444 A2 discloses a context-dependent, multiply binding name resolution system, wherein a name resolver receives a request and the intended recipient of the request is resolved based upon a combination of one or more predetermined criteria. The request is then forwarded to a selected destination.

It is estimated that by the year 2003, the number of domains on the Internet will increase ten-fold, exceeding 150 million domains. Associated with this increase in the number of domains will be an increase in user dissonance. Current implementations of the Domain Name System are entirely inadequate and unable to handle resultant DNS files' size or the magnitude and frequency of changes to these DNS files. Even today, real problems exist with content access and/or content distribution over the Internet. It is estimated that ten to thirty percent of Internet connection events are unsuccessful or unsatisfactory.

### SUMMARY

The present invention provides a scalable and flexible platform for providing global directory services. In some embodiments, the invention uses redundant information servers to provide ubiquitous and high-performance access to directory services. This system of servers leverages the scalability and replication mechanisms provided by commercial database software. The DNS according to the present invention has an underlying modular design which allows additional wire-protocol services to be easily incorporated into the system, and allows additional modules to provide intelligent/dynamic responses by affecting changes in the data repository.

In various aspects, the present invention:
- Supports large-scale service model better than alternative DNS servers.
- Integrates other Internet services, e.g. "whois", in a single data repository.
- Multi-threaded server provides scalability to exploit commercial-level hardware.
- Modular database implementation facilitates the addition of new features.
- Database replication provides for ease of management of distributed servers, and database backup features provide information integrity.

Globally distributed server replicas provide the reliability, throughput and low delay required to scale a large commercial service. The servers are tied together using advanced Internet routing mechanisms that are reactive to the state of individual server replicas.

Multiple servers provide increased system throughput, reliability in the event of server failure, reliability in the event of provider network failure and nearest server mechanics serve as basis for advanced redirection service.

Embodiments of the present invention provide a DNS system based on an information-centric design, where multiple system components interact with system state that is maintained in the database. The database provides both the principle Internet information, and the required associations and configuration to specify the operation of the active components. The system allows for reduced operational staff requirements by supporting custom user-interface for direct management of user data, with integrated security and data validation to maintain data integrity.

The present invention also provides:
- Information update via multiple user-specific custom interfaces, program APIs, or Internet services such as dynamic DNS updates.
- Fine-granularity security based on association between login and information objects.
- Modular active components for reporting, billing and data integrity checking.

In one aspect, this invention provides a system for processing domain name requests. The system includes a query mechanism constructed and adapted to (a) obtain a user request for response information corresponding to a particular domain name; and (b) provide complete response information in a single response to the user request. The user request may be a domain name resolution request, in which case the query mechanism provides an Internet Protocol (IP) address corresponding to the domain name. The system accommodates user requests for other typed DNS data.

In some embodiments the a query mechanism is further constructed and adapted to provide the response depending on context information. The context information may include at least one of (a) context information from the request; (b) context information from the system; and (c) global context information.

The context information may include address information indicating an address of the user; the local time; and/or the location of the system.

In some embodiments, the system has a data cache and the query mechanism is further constructed and adapted to, upon receipt of a user request, first attempt to find an answer to the user request in the data cache.

In some embodiments, the query mechanism is further constructed and adapted to (a) if the answer exists in the data cache and the answer is fresh, send the answer directly from the cached data; and (b) if the answer exists in the data cache and the answer is stale, or if the answer does not exist in the data cache, then acquire the answer from a database; send the answer; and update the data cache to reflect the acquired answer.

Sometimes items in the data cache have a maximum lifetime which ranges from the time to live of the lowest resource record in a complete answer to the maximum cache time value configured for the system as a whole.

In some embodiments, the query mechanism is further constructed and adapted to implement negative caching such that if a request is made for a host that does not exist in an active domain, the negative response will be saved in the cache.

In another aspect, this invention is a method of providing an Internet Protocol (IP) address of one of a plurality of devices on the Internet. The method includes obtaining a user request for an IP address corresponding to a particular domain name; and providing the IP address in a single response to the user request. The method may include providing the IP address depending on context information. The context information may include at least one of (a) context information from the user request; (b) local context information; and (c) global context information.

In yet another aspect, this invention is a system comprising a network of distributed Domain Name Servers (DNSs), each DNS comprising a database; and a query mechanism constructed and adapted to obtain from the database a user request for response information corresponding to a particular domain name; and to provide complete response information in a single response to the user request. The databases in the network are replicated.

### BRIEF DESCRIPTION OF THE DRAWINGS

The objects and advantages of the invention will be apparent upon consideration of the following detailed description, taken in conjunction with the accompanying drawings, in which the reference characters refer to like parts throughout and in which:
**FIGURE 1** provides an overview of embodiments of the present invention operating within the Internet; and

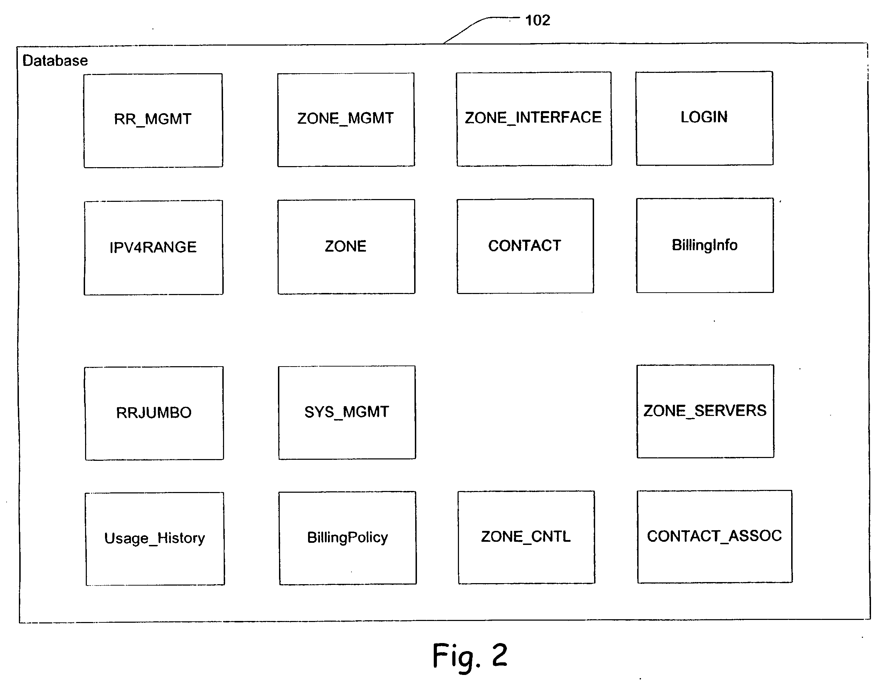

**FIGURE 2** depicts the logical structure of the database schema according to embodiments of the present invention.

### DETAILED DESCRIPTION

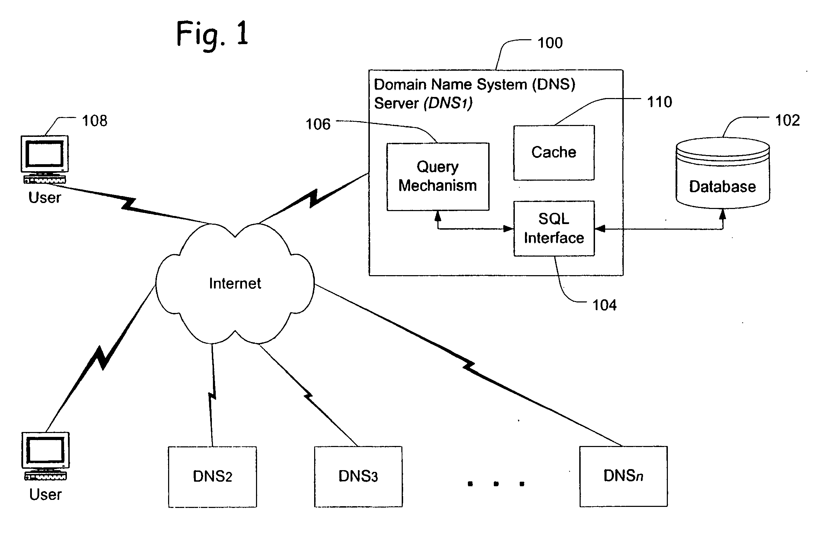

With reference to **FIGURE 1,** a Domain Name System (DNS) server **100** (DNS₁) according to the present invention comprises a database **102** having a unique database schema and a complementary unique SQL interface **104.** A query mechanism **106** uses the SQL interface **104** to query the database **102** and to return results to requesting users, e.g., user **108.**

The present invention can be considered at two levels, namely at a server level (e.g., *DNS₁* **100)** and at a system level (e.g., *DNS₁, DNS₂, ...*, *DNSₙ*)*.*
1. **Server-level:** At the server level, this invention provides mechanisms that enable a DNS server (e.g., *DNS₁* **100)** according to the present invention to achieve sufficient performance (circa thousands of queries/second) even though the underlying data repository supports basic data retrieval at a rate of hundreds of queries/second.
   Features of this server level, discussed below in detail, include:
   - Aggregate database queries
   - Common case optimizations
   - Data caching (and consequently-required cache invalidation mechanisms)
2. **System-level:** At the system level, this invention provides mechanisms that enable a system of DNS servers (e.g., *DNS₁, DNS₂, ..., DNSₙ* in **FIGURE 1**) to provide enhanced/integrated management of information, and provides various levels of performance enhancement for incoming queries and internal transactions.
   Features of this system level, discussed below in detail, include:
   - Modular data-centric design
   - Database-layer synchronization
   - Single IP address announcement of replicated servers

The server-level mechanisms according to the present invention enable the DNS server to achieve a greater transaction throughput rate. The system-level mechanisms work synergistically, and allow the DNS System according to the present invention to provide a diverse set of features and benefits.

The server-level mechanisms according to the present invention enable the modular data-centric design and database-layer synchronization.

### SERVER-LEVEL MECHANISMS

A name server response to a DNS query requires a complex set of calculations that allow:
(a) different responses to be returned depending on the servers authority,
(b) different answers depending on the existing domain name data, and
(c) the server to return an answer comprised of multiple inter-dependent sections.

Specifically, a DNS's response algorithm must consider at least the following:
- Three response sections: *Answers, Authority,* and *Additional*
- CNAME (domain name alias) dereferencing
- Wild card matching (matching of leading superstrings)
- Iterative domain name search (matching the longest recognized domain name)
   Conventional (prior art) DNS servers make many distinct queries to the data repository in order to determine the correct records to include in a response. Consequently, the transaction rate of the DNS server will be reduced by a similar factor (e.g., if eight database queries are required, transaction rate will be reduced by approximately a factor of eight). The DNS server according to the present invention significantly reduce the average number of queries required to construct a DNS response, as compared with conventional so-called "straight forward" algorithms that depend on many distinct queries to the data repository.

### Aggregate Database Queries

The DNS server according to the present invention uses compound database queries so that a single query can return multiple component records required to construct a DNS response. Moreover, database queries are correlated so that in instances where multiple queries are required, subsequent queries can be optimized based on records retrieved by earlier database queries. The DNS query strategy according to the present invention:
(a) retrieves combinations of *Answer, Authority,* and *Additional* records in a single query,
(b) retrieves available CNAME records along with *Answer*/*Authority*/*Additional* records, and
(c) reduces iterative domain name search overhead by correlating records from different iterations.

With this invention, the number of database queries required to construct a complete DNS response can be as low as one. This is a considerably improvement when compared to a similar strategy based on simple database queries that would require a separate query for each of *Answers* and *Authority,* and multiple queries for *Additional* records.

### Common Case Optimizations

In general, common case optimizations are effective in systems where there are a number of distinct potential outcomes (a) with different probabilities of occurrence, (b) requiring varying levels of incremental overhead, and (c) where a determination can be made that a specific outcome has been reached, without an exhaustive outcome analysis.

The present invention recognizes that common case optimization is applicable to the DNS server database query strategy, and has identified two specific optimizations based on knowledge of DNS protocols and the expected incoming query stream. The DNS system according to the present invention implements these optimizations by making the test for (and handling of) each case a separate code segment, and promotes this code to handle the task prior to the execution of any general query code.

### Case #1:

The DNS server according to the present invention contains authoritative answer for a domain name query that is one label longer than the zone's domain name (e.g., with a zone name of *"foo.com ",* then an optimization is effective for *"www.foo.com "* but not for *"www.mkt.foo.com").*

### Case #2:

The DNS server according to the present invention has delegated the next-level subdomain name (e.g., the incoming query is for the domain name *"www.mkt.foo.com*", which is in the zone"*foo.com",* then the optimization is effective if the *"mkt.foo.com"* zone has been subdelegated).

The use of these specific optimizations does not preclude the development of additional optimizations. The fundamental realization and requirements remain unchanged, allowing common case optimizations to be applied to outcomes based on revised outcome probabilities.

Specifically, further common case optimizations specified rely on restrictions on the records in the database to guarantee the validity of the query response. For example, a generalization of *Case* #1 (above) that optimizes for arbitrary length domain name queries (e.g., the incoming query is for the domain name *"www.unit.mkt.foo.com"* within the zone for *"foo.com"*). This case can be optimized if no conflicting records are present, i.e., any record that could alter the precedence made for the optimization case (e.g., an intervening NS record or wildcard record associated with the domain name *"mkt.foo.com"* would have an impact on the above example of *"www.unit.mkt.foo.com"* in zone *"foo.com"*).

Additionally, the DNS query strategy according to the present invention allows for flexible/dynamic optimization code to be constructed, where, e.g., a specific ordering of individual common case optimizations is associated with each zone, based on prior knowledge or statistics maintained about each zone. This technique can be applied so that the best strategy is selected at the granularity of each zone, each server, or any identifiable class of query stream.

### Data Caching and Cache Invalidation

Dynamic data caching is a mechanism that has been applied to achieve performance in many types of systems, but has never before been use to provide a fast-access data repository of authoritative data within an Domain Name Server.

The Domain Name System was designed with an integrated "time to live" (TTL) caching mechanism, and we note three example applications of caching elsewhere within the Internet and Domain Name System.
- Applications such as web browsers frequently maintain copies of DNS records obtained while processing HTTP requests, and use applicable DNS records for subsequent requests. This use of caching does not maintain authoritative data, nor does it directly effect the operation of a DNS server.
- Caching DNS servers (also known as recursive servers or "helper" servers) provide a separate function from "hosting" DNS servers. Recursive servers act on the behalf of an application (e.g., a user's web browser) and query a hierarchical series of hosting DNS servers to obtain the required DNS response. Information obtained in the course of a DNS query resolution may be maintained and used to expedite subsequent DNS queries, until each record's specified time-to-live has expired. This is a fundamental use within the DNS, but only addresses the behavior of non-authoritative servers when handling authoritative data.
- Conventional primary DNS servers (e.g., as embodied by the "bind" server distribution) read all authoritative domain information into a computer memory directly from files, and answer queries based on a complete memory-resident copy of all domain information. Unlike the above caching examples, this is not an application of dynamic caching, but is a static copy of DNS information that does not change or replace based on well-known caching criteria such as frequency of use, nor does it embody any dynamic mechanisms for maintaining cache consistency. There is no dynamic mechanism for a "cache miss" that involves the standard alternative method of making a backup query to the primary (i.e., non-cache) repository.

According to embodiments of the present invention, the DNS server maintains an internal dynamic cache of recently-used authoritative DNS records taken from the database repository. Two embodiments are specified: (1) where individual resource records are cached separately and subsequent DNS response are comprised of the individual records, and (2) where the entire response to a DNS query is cached as an aggregate and are immediately available for a subsequent response, eliminating overhead required to construct a complete response. The strategy for handling incoming DNS queries includes an examination of the internal cache for efficient access to data, and if not available, a subsequent query to the primary data repository (database) is made. These mechanisms are used for both "positive caching," i.e., when the data exists, and "negative caching," i.e., when the server can authoritatively respond that the information does not exist.

The DNS server according to the present invention also embodies cache replacement mechanisms to control the amount of "stale" (infrequently used) data in the cache, and to allow for effective utilization of cache and system resources. Multiple embodiments exist to remove DNS data from the cache based on frequency or timeliness of use.

### Cache Invalidation

A dynamic caching system must employ cache invalidation mechanisms to guarantee that information in the cache corresponds to the state of the primary data repository. This requires that data items are removed from (or replaced within) the cache when the corresponding information is changed within the primary data repository. This allows a DNS server according to the present invention to accurately reflect the correct information within the system.

The DNS server according to the present invention are embodied by a number of related cache invalidation mechanisms that address the complete range of transaction types that can be performed on the primary data repository, and the type of cache data that can be maintained in the system. The design space that defines the cache transactions of interest is represented by the Table below which specifies twenty four different cache invalidation transactions that can be addressed by the invention's cache invalidation strategy. Note that not every space need be addressed by a particular embodiment of the invention, and that some cache invalidation mechanisms will address multiple invalidation requirements.

| | **Record Cache** | **Query Cache *(Answers)*** | **Query Cache *(Authority)*** | **Query Cache *(Additional)*** |
|---|---|---|---|---|
| **Delete from Primary Dbase** | Positive -vs.- Negative | Positive -vs.- Negative | Positive -vs.- Negative | Positive -vs.-Negative |
| **Addition to Primary Dbase** | Positive -vs.- Negative | Positive -vs.- Negative | Positive -vs.- Negative | Positive -vs.-Negative |
| **Modify within Primary Dbase** | Positive -vs.- Negative | Positive -vs.- Negative | Positive -vs.- Negative | Positive -vs.-Negative |

Multiple invalidation mechanisms can be applied together, so that each addresses a subset of the potential cache interactions and requirements. Further, these mechanisms can embody varying criteria for timeliness of data invalidation, according to the importance assigned to each subset. For example, when caching entire DNS responses the data within an Answer section may be considered more critical than the data within an *Authority* section. In this case, mechanisms can be employed that immediately respond to updates to information in the Answer section, while other less timely mechanisms will eventually invalidate the records within the *Authority* section.

### SYSTEM-LEVEL MECHANISMS

The system-level mechanisms according to the present invention work synergistically, enabling the DNS System according to the present invention to provide enhanced/integrated management of information, and to provide a range of performance enhancement for incoming queries and internal transactions.
- Modular data-centric design
- Database-layer synchronization
- Single IP address announcement of replicated servers

### Modular Data-Centric Design

The DNS domain name server according to the present invention (e.g., DNS₁ **100** of **FIGURE 1**) separates the functionality of the standard monolithic Internet server into two distinct components: a commercial database system as the data repository, and a DNS wire-protocol server designed to answer queries based on authoritative DNS data from the database component. This architectural choice provides for a clean modular design, which in turn provides a flexible and scalable platform that is leveraged to provide a diverse set of features and inventions.
- Data-Centric Modeling and Functional Server Module Extensions-The two-component design allows for modular extensions to both the data model, and the functions (e.g., servers) that operate on the system. Embodiments of this invention include, but are not limited to, one or more user interfaces for data management, transaction processors to provide an extensible API for data management, Internet system monitors that can query external system status (e.g., webserver availability) and affect changes to the data repository, and servers for other Internet directory servers (e.g., *whois, radius,* etc).
- Integrated Access Control Mechanisms-Using a database repository for DNS information allows several principle objects (e.g., users and other network data schemas) to be modeled and managed. A significant feature of the DNS Domain Management System according to the present invention is the ability to control and delegate the many-to-many access patterns of users accessing domain name data.
- Query and Context Specific Responses-Conventional (prior art) DNS servers take as input a *<domain name, query type, query class>* tuple, and return the appropriate resource records. The DNS system according to the present invention has revised the basic query/response transaction by incorporating additional fields within the data model such that the response to a query can be based on additional criteria. These criteria can be comprised of information obtained from the incoming query (e.g., source IP address), information available to the local server (e.g., time of day or server identity), and similar context or query specific information.
- Dynamically Configurable DNS Record Types-The DNS server according to the present invention allows new resource record types to be defined, and immediately incorporated into the system. Based on resource record templates included in the data model, the DNS server according to the present invention system can incorporate new record types in minutes without additional low-level code development. This is in contrast to the conventional (prior art), where deployment of a new resource record type requires considerable low-level program design and coding, and requires a new server binary be deployed on all applicable machines. Moreover, combined with context specific responses (above), domain administrators may define their own "local" types that are specific to the answers returned for their DNS domain.
- Ability to deploy and maintain a state-of-the-art data management service based on commodity implementations of core database technologies. The conventional (prior art) systems for Domain Name System management deploy integrated ad-hoc implementations of database technology, which lag advanced database features and make it difficult to deploy new features based on database technology advances.

### Database-Layer Synchronization

The DNS system according to the present invention maintains data consistency between multiple redundant servers (e.g., *DNS₁, DNS₂, ..., DNSₙ* in FIGURE 1) by propagating changes to the managed data using database-level transaction processing. This has advantages over conventional (prior art) consistency mechanisms, which are based on application-level transactions. These advantages include:
- Virtually immediate propagation of changes to Domain Name System information. This is particularly important when inaccurate information must be corrected, or when critical domain information changes frequently and changes must be visible quickly. For example, one of the most frequently changed zones, ".COM", also has the greatest number of records. Using conventional (prior art) systems, ".COM" has historically been restricted to a twelve-hour periodic updates. Using the DNS system of the present invention, changes to ".COM" are routinely propagated within 5-15 minutes.
- Ability to accept and propagate changes to Domain Name System information from multiple servers, and consequently, the ability to make data management more reliable with better system availability and performance. This is in contrast to conventional (prior art) DNS systems, which do not have the conflict resolution mechanisms required to support multiple sources of update transactions.

### Single IP Address Deployment for Replicated Servers

Globally distributed server replicas (e.g., *DNS₁, DNS₂, ..., DNSₙ)* provide the reliability, throughput and low delay required to scale a large commercial service. The servers are tied together using advanced Internet routing mechanisms that are reactive to the state of individual server replicas. In preferred embodiments, each DNS system according to the present invention shares a common IP address and supports a name server replica. The shared IP addresses are injected into the Internet routing mesh by each server so that Internet routers will direct IP packets to the nearest topological server. Each server replica is monitored for correct behavior, and the IP route is withdrawn if the server no longer responds to DNS queries. This mechanism provides the following benefits:
- User DNS queries are directed to the nearest DNS replica minimizes the delay experienced for DNS resolution.
- Transitory server and network failures are transparent to a user's DNS query and application transaction. Servers that are not reachable or functional are invisible, and DNS queries arrive at the nearest functional server without experiencing the delay for standard DNS timeout and retransmission.
- The DNS system acquires user proximity information based on the server replica that receives the user DNS query. This information can be used to provide proximity based responses to direct users to nearby application servers.

### IMPLEMENTATION

### THE DATABASE

This section describes the unique database schema of the database 102.

### OVERVIEW

The database **102** according to preferred embodiments of this invention is organized and structured according to the following unique database schema. The database schema involves fourteen (14) tables. Only three (3) of these tables contain actual data (i.e., DNS & Contact), the other eleven (11) tables are needed to manage the data. The schema allows management of who has access to which data, how can they access it, who can create new data, and how they should be billed for use of the system.

The data managed by the DNS Server **100** is (a) contact information, (b) zone information, and (c) resource record information. Although zones and resource records are related, the system must have the ability to manage them distinctly. The reason for this is to enable targeting different users, some of which want to use the Server 100 to manage an entire zone for them, and some of which will just enter individual resource records (in a particular zone).

For any data that can put in the system, there are two access control mechanisms involved: (1) a mechanism that specifies whether the item can be put in (created) in the system, and (2) a mechanism that specifies how items can be accessed.

### TABLE LIST & SUMMARY

| **Table Name** | **Description** |
|---|---|
| LOGIN | User information (to establish identity on the system) |
| SYS_MGMT | Describes how the DNS system is managed (e.g., who can create new zones, billing policy, etc) |
| RRJUMBO | combined Resource Record (RR) index and data. |
| CONTACT | people/role/organization (like whois) |
| CONTACT_ASSOC | indicates association between contact information, and other data/items (e.g., zones or RRs) |
| ZONE | basic mgmt information for a related set of DNS RRs |
| ZONE_INTERFACE | list of "outside" servers the system must talk to primaries/masters OR secondaries we update) |
| ZONE_CNTL | much like information in SOA record |
| ZONE_MGMT | zone owner describes how zone may be used (e.g., who can create new RRs, billing policy, etc) |
| ZONE_SERVERS | maintains list of which zones in system, and which IP addresses can do zone transfer |
| RR_MGMT | indicates logins that can modify specific RRs (Resource Records) |
| BillingPolicy | rules/policy owners set for billing others for use |
| Billinglnfo | actual billing information for a particular object (derived from owners BillingPolicy) |
| USAGE_HISTORY | contains past usage data (to answer billing concerns) |
| IPV4RANGE | restricts (or allows) access per source IP address |

### TABLE SCHEMA

This section describes what information is in the tables and, in some cases, gives the formats and sizes of the data used in some embodiments of the present invention.

The LOGIN table describes identity within DNS system of the present invention. The table includes information on how to authenticate a user to system. The LOGIN Table is established via login/password, X.509, PGP, DNSSec, etc.

The following table summarizes the fields of the LOGIN table.

| **LOGIN** | | |
|---|---|---|
| **Field** | **Description** | **Relationship to other Tables** |
| Id | internal dbase index/pointer | appears in other tables indicating this users has some claim/access to the object |
| Email | contact information | |
| Ipaddr | restrict logins to specific IP range | index to IPV4RANGE table |
| x509id | ID for primary authentication method | |
| Username | backup login name | |
| Password | backup password | |
| Passques | user-supplied question for lost information | |
| Passansw | user-supplies answer for lost information | |

The SYS_MGMT table (described below) provides a template about use, access, etc. It provides information about how the system is managed; who can access, modify, create new "objects", and information on how users are charged for access. The SYS_MGMT table allows the DNS according to the present invention to be deployed in different ways (e.g., closed access at large companies versus open ISP access). Some preferred embodiments allow deployment of two object types to be created, namely contacts and zones. Both can be created by anyone. Contacts can be created at no charge; zones may or may not incur charges (perhaps per-user).

| **SYS_MGMT** | | |
|---|---|---|
| **Field** | **Description** | **Relationship to other Tables** |
| Objtype | what type of objects can be created | |
| Access | type (create or read) | |
| Login | (loginid OR "ANY") | ID in LOGIN table about who can create |
| Ipaddr | restrict/grant access by IPsrc Addr | |
| Billing | specifies how to charge for access | index into BILLING table |

The RRJUMBO table represents DNS resource record (RR) information. This table is for the "index" or "lookup" of the incoming query, and contains columns for different parts of RR data section. Resource records are defined in RFC 1035 [Network Working Group Request for Comments: 1035, P. Mockapetris, ISI, November 1987] which is incorporated herein by reference.

| **RRJUMBO** | | |
|---|---|---|
| **Field** | **Description** | **Relationship to other Tables** |
| Id | internal dbase ID | referenced by other tables |
| Active | indicates RR is "active" (e.g., paid for) | |
| Dead | indicates "machine" inactive | |
| Zone | zone membership identifier | indicates RR associated with ZONE table |
| Dname | domain name (e.g., "www.ultradns.com") | |
| Lname | Lower case Dname to optimize lookups | |
| Type | RR type | |
| Class | RR Class | |
| Servers | indicates which server return particular RR | |
| Time | Indicates time frame RR is returned | |
| ipv4addr | index into IPV4RANGE Table | index into IPV4RANGE table (to specify per IPaddress RRs) |
| ip_low | simple (hi-performance) IP source address specification | |
| ip_high | simple (hi-performance) IP source address specification | |
| ip_bits | simple (hi-performance) IP source address specification | |
| Create_who | login ID of record creator | indicates record created by LOGIN table |
| Create_ip | IP address of creator (if anonymous) | |
| Create_date | when created | |
| Update_who | login ID last modify | login id of last update |
| Update_when | last modified time | |
| Billing | index to BillingInfo | billing information associated with RR |
| Readcnt | recent RR reads | |
| Readsince | start time of read count | |
| Writecnt | recent RR changes | |
| Writesince | start time of write count | |
| Ttl | Resource record TTL (time to live) (seconds) | |
| f1 | RRdata field #1 | |
| F2 | RRdata field #2 | |
| F3 | RRdata field #3 | |
| F4 | RRdata field #4 | |
| F5 | RRdata field #5 | |
| F6 | RRdata field #6 | |
| F7 | RRdata field #7 | |
| F8 | RRdata field #8 | |
| refl | dname reference for "additional" RRs | |

A "DNS lookup" in the RRJUMBO table uses (matches against) the following six values to find the requested DNS resource record:
1. domain name (from dns query packet)
2. dns type (from dns query packet)
3. dns class (from dns query packet)
4. server id (name/id of server answering query)
5. time (current time of day at server)
6. source IP address (from the IP packet)

Note that the use of the RRdata fields, f1 ... f8, depends on the type of RR (e.g., MX records will use f1 and f2, A records will only use f1, and SOA records will use f1 - f7).

The RRJUMBO table is used to store data for multiple purposes: in addition to storing "live" domain records, "template" records are stored which embody the mechanism to provide configurable DNS records. Each DNS Resource Record type is represented by one or more template records in the RRJUMBO table which specify the format and structure of each record type.

The CONTACT Table contains information about a person, role, or organization (i.e., this is basically "whois" information). Note that the information in the CONTACT Table has nothing to do system login.

| **CONTACT** | | |
|---|---|---|
| **Field** | **Description** | **Relationship to other Tables** |
| Id | Internal dbase index | referenced by other tables |
| Order | Sequence information for related records | |
| Type | name, phone, fax, email, etc. (see list below) | |
| Information | Associated information (e.g., name: Steve Hotz) | |
| Anonacl | read permission for field (e.g., do not give out phone number) | |
| ipaddr | IP address based read restrictions/permissions | index into IPV4RANGE Table |

The TYPE values for above "type" field (similar to RIPE-181) include:
- name
- email
- email-alt
- phone
- phone-alt
- fax-no
- nic-hdl
- nic-hdl-alt
- address (multiple-line text string)
- source (in case information came from another place)
- date-create
- date-update

The CONTACT_ASSOC Table indicates association between contact information, and other data/items (e.g., zones or RRs)

| **CONTACT_ASSOC** | | |
|---|---|---|
| **Field** | **Description** | **Relationship to other Tables** |
| Id | name/id of object (e.g., "ultradns.com".) | internal identifier of DNS data item (e.g., contact, zone, or RR) |
| Objtype | {system, zone, record} | |
| contact | id of CONTACT information | |
| Type | {admin, tech, billing, registration} | |
| Public | {yes, no} read access for general public | |

The ZONE table basic information about a group of related RRs.

| **ZONE** | | |
|---|---|---|
| **Field** | **Description** | **Relationship to other Tables** |
| Zone | Name of the zone (e.g., "ultradns.com") | Every column in this table relates to other tables. |
| Owner | LOGIN id of zone owner | |
| Billing | How this zone is billed (BillingInfo) | |
| zonecntl | ZONE_CTRL id for internal consistency | |

The ZONE_INTERFACE Table specifies external servers (i.e., servers that are not embodiments of the present invention) that must either be used as primary/master, or updated as secondary/slave.

| **ZONE_INTERFACE** | | |
|---|---|---|
| **Field** | **Description** | **Relationship to other Tables** |
| Zone | zone being updated/transferred | refers to zone name in numerous tables |
| inout | {in, out} | |
| srvname | name of server | |
| Srvip | IP address of server | |
| ctrl | ZONE_CTRL id for record controlling frequency | reference into ZONE_CTRL table |
| view_ip | if multi-dimension records, snapshot this IP | |
| view_time | if multi-dimension, snapshot at this time | |
| view_srv | if multi-dimension, snapshot for server | |

The ZONE_CNTL Table contains zone control information, similar to SOA parameters. This Table is used for database consistency (may not be needed with internal Oracle, however, can specify interface with external servers).

| **ZONE_CNTL** | | |
|---|---|---|
| **Field** | **Description** | **Relationship to other Tables** |
| Id | Internal Identifier | Referenced by other tables |
| Serial | | |
| Refresh | | |
| Retry | | |
| Expire | | |
| Mincache | | |
| Flags | Notify turned on | |

The ZONE_MGMT table includes information about how a particular zone is managed; who can access, modify, create new "objects", and information on how the user is charged for access.

| **ZONE_MGMT** | | |
|---|---|---|
| **Field** | **Description** | **Relationship to other Tables** |
| Zone | zone being managed | relates several tables holding zone information |
| login | login ID with access (or "ANY") | LOGIN table for who has access |
| ipaddr | source IP access restrictions | IPv4Range table for src address access |
| Billing | billing policy associated with access | index into BillingPolicy table |
| rrlist | bit map of RR types that can be created | |
| Mods | allow zone modifications: | |
| | • can modify via dynamic update | |
| | • modify all RRs | |
| | • modify all contact information | |
| | • modify zone information | |
| | • modify zone_mgmt information | |
| Features | • Bit map of allowed features | |
| | • define new types | |
| | • create multi-dimensional | |
| | • can create RRs that allow dynamic updates | |
| | • can create new RRs using dynamic update | |
| | • dead machine monitoring | |
| | • other | |
| Flags | indicate other actions associated with update/access | |
| | • indicating required per-record information (i.e., contact) | |
| | • owner requires change notification (via email) | |

The ZONE_SERVERS table is an auxiliary table listing zones for which the system is responsible. This table is used by servers to find zones for which they are authoritative.

| **ZONE_SERVERS** | | |
|---|---|---|
| **Field** | **Description** | **Relationship to other Tables** |
| Zone | Zone name | Zone name relates to multiple tables |
| Server | Server holding zone | |
| xferip | IPV4RANGE allowed zone transfers | IPv4Range index |

The RR_MGMT Table provides an access list for specific RRs.

| **RR_MGMT** | | |
|---|---|---|
| **Field** | **Description** | **Relationship to other Tables** |
| Rrod | Rrindex id | Every column (except flags) relates columns in other tables. |
| Login | Login allowed to change (or "ANY") | |
| ipaddr | src IP based access restrictions | |
| Flags | access allowed (initially, all or nothing) | |

The BillingPolicy table (set by owner(s) of system or zone) contains information about how to bill for system use. The owner of system sets this up ahead of time, and the system enforces the various billing policies.

| **BillingPolicy** | | |
|---|---|---|
| **Field** | **Description** | **Relationship to other Tables** |
| billp_id | internal dbase index | referenced by other table columns |
| what | zone, contact, dname, RRtype(s), feature | |
| type | one-time, read, write, time, <feature_name> | |
| Unit | <count> for read/write day\|week\|month\|year for time or feature | |
| Amt | Amount (in dollars) | |
| cnd_type | reads OR writes [must be greater than] | |
| end_unit | count [per] | |
| end_time | time unit (day\|week\|month\|year) | |
| intro_time | days before billing starts | |
| period | yearly/monthly/choice | |
| year_discount | can offer (percentage) discount for yearly rate | |

Each zone may specify more than one policy. For example,:

| **<what>** | **<type>** | **<unit>** | **<amt>** | **<cond>** | | | |
|---|---|---|---|---|---|---|---|
| | | | | **Type** | **>** | **Unit** | **Time** |
| Zone | 1-time | | 29.99 | | | | |
| Zone | Time | Year | 9.99 | | | | |
| Zone | Write | 1 | 1.00 | Write | > | 10 | Month |
| Feature | Dyn_Upd | Month | 1.99 | | | | |

The BILLINGINFO Table contains information about who and when to bill for use.

| **BILLINGINFO** | | |
|---|---|---|
| **Field** | **Description** | **Relationship to other Tables** |
| billi_id | internal dbase index | referenced by other table columns |
| who_id | billing contact index | reference to CONTACT table |
| Method | Credit card, usmail, email | |
| billp_id | Reference to BillingPolicy table | |
| Credcard | credit card account | |
| expire | credit card expire date | |
| card_id | billing address for credit card (if different from who id) | reference to CONTACT table |
| billp_id | index to Billing Policy record | |
| Create_date | when billing record was created | |
| next_date | next statement date | |

The USAGE_HIST Table contains historical system/information usage information. Can attach to various objects: RRdata, Zone, Contact, etc. (Some preferred embodiments attach to RRs)

| **USAGE_HIST** | | |
|---|---|---|
| **Field** | **Description** | **Relationship to other Tables** |
| Id | internal dbase ID of object tracked | relates to id field of other tables |
| Objtype | RR/zone/contact/other | determines which "other table" |
| Access | read/write/other | |
| start | start of period (seconds since epoch) | |
| End | duration of period (e.g., in seconds) | |
| cnt | number of accesses | |

Preferably use logging is (a) only turned on for some records, and (b) could be a "premium service". Must keep "current" usage for billing, but this feature is "turned on".

The IPv4Range Table contains CIDRized subnet masks, primarily used for address based (i.e., weak) authentication. This table is used for (a) handing out RRs based on srcipaddress, and (b) simple access control for updates to data (e.g., using dynamic updates as implemented).

| **IPv4Range** | | |
|---|---|---|
| **Field** | **Description** | **Relationship to other Tables** |
| Ipid | index of IP range spec | this table id serves as index, and appears in other tables (indicating whether access is allowed from specific source IP addresses |
| Flag | flag indicating allowed/prohibited | |
| bits | number of bits in mask | |
| Low | lowest address value | |
| High | highest address value | |

### Example

| **listid** | **Flag** | **bits** | **iprangelow** | **Iprangehi** |
|---|---|---|---|---|
| #1 | Prohibit | 0 | 0x00000000 | 0xffffffff |
| #1 | Allow | 16 | 0x80090000 | 0x8009ffff |
| #2 | Allow | 0 | 0x00000000 | 0xffffffff |
| #2 | Prohibit | 16 | 0xa007000 | 0xa007fff |
| #2 | Prohibit | 16 | 0xa0090000 | 0xa009ffff |
| #3 | Prohibit | 0 | 0x00000000 | 0xfffffff |
| #3 | allow | 16 | 0xc9140000 | 0xc914ffff |
| #3 | prohibit | 24 | 0xc9142800 | 0xc91428ff |
| #3 | prohibit | 24 | 0xc9142a00 | 0xc9142aff |

| | | | | |
|---|---|---|---|---|
| #1 allows small number of addresses; #2 prohibits small number of addresses; #3 allows all in range, with exceptions; | | | | |

The following section provides the database field formats and sizes for a preferred embodiment of the present invention. Some of the fields have common sizes:
256 char = dnames
10 num = 32bit integers (e.g., IPv4addr and time in seconds)
14 num = internal identifier

| **LOGIN** | | |
|---|---|---|
| Id | num 14 | |
| Email | vch 256 | |
| Ipaddr | num 14 | null-ok |
| x509id | vch 256 | |
| Username | vch 64 | |
| Password | vch 32 | |
| Passques | vch 80 | |
| Passansw | vch 80 | |

| **SYS_MGMT** | | |
|---|---|---|
| objtype | Vch 16 | |
| access | Vch 16 | |
| login | Num 14 | |
| ipaddr | Num 14 | null-ok |
| billing | Num 14 | null-ok |

| **RRJUMBO** | | |
|---|---|---|
| id | num 14 | |
| active | num 1 | |
| dead | num 2 | |
| zone | vch 256 | |
| dname | vch 256 | |
| type | vch 16 | |
| class | vch 16 | |
| servers | vch 32 | null-ok |
| time | vch 168 | null-ok |
| ipv4addr | num 14 | null-ok |
| ip_low | num 10 | null-ok |
| ip_high | num 10 | null-ok |
| ip_bits | num 3 | null-ok |
| create_who | num 14 | |
| create_ip | num 10 | |
| create_date | num 10 | |
| update_who | num 14 | |
| update_when | num 10 | |
| billing | num 14 | null-ok |
| readcnt | num 8 | null-ok |
| readsince | num 10 | null-ok |
| writecnt | num 8 | null-ok |
| writesince | num 10 | null-ok |
| TTL | num 10 | |
| f1 | vch 1024 | |
| f2 | vch 1024 | null-ok |
| f3 | vch 256 | null-ok |
| f4 | vch 256 | null-ok |
| f5 | vch 256 | null-ok |
| f6 | vch 256 | null-ok |
| f7 | vch 256 | null-ok |
| f8 | vch 256 | null-ok |
| refl | vch 256 | null-ok |

| **CONTACT** | | |
|---|---|---|
| id | num 14 | |
| order | num 2 | |
| type | vch 16 | |
| info | vch 168 | |
| anonacl | vch 8 | null-ok |
| ipaddr | num 14 | null-ok |

| **CONTACT ASSOC** | | |
|---|---|---|
| id | num 14 | |
| objtype | vch 16 | |
| contact | num 14 | |
| type | vch 20 | null-ok |
| public | vch 8 | |

| **ZONE** | | |
|---|---|---|
| zone | vch 256 | |
| owner | num 14 | |
| billing | num 14 | null-ok |
| zonecntl | num 14 | |

| **ZONE_INTERFACE** | | |
|---|---|---|
| zone | vch 256 | |
| inout | vch 8 | |
| srvname | vch 256 | null-ok |
| srvip | num 10 | null-ok |
| ctrl | num 14 | |
| view_ip | num 10 | null-ok |
| view_time | num 3 | null-ok |
| view_srv | num 3 | null-ok |

| **ZONE_CNTL** | | |
|---|---|---|
| id | num 14 | |
| serial | num 10 | |
| refresh | num 10 | |
| retry | num 10 | |
| expire | num 10 | |
| mincache | num 10 | |
| flags | vch 8 | null-ok |

| **ZONE_MGMT** | | |
|---|---|---|
| zone | vch 256 | |
| login | num 14 | null-ok |
| ipaddr | num 14 | null-ok |
| billing | num 14 | null-ok |
| rrlist | vch 256 | |
| mods | vch 16 | |
| features vch 16 | null-ok | |
| flags | vch 8 | |

| **ZONE_SERVERS** | | |
|---|---|---|
| zone | vch 256 | |
| server | vch 256 | |
| xferip | num 14 | null-ok |

| **RR_MGMT** | | |
|---|---|---|
| rrid | num 14 | |
| login | num 14 | null-ok |
| ipaddr | num 14 | null-ok |
| flags | vch 8 | null-ok |

| **BILLINGPOLICY** | | |
|---|---|---|
| blllp_id | num 14 | |
| what | vch 32 | |
| type | vch 32 | |
| unit | vch 16 | |
| amt | num 8 | |
| cnd_type | vch 8 | null-ok |
| cnd_unit | num 8 | null-ok |
| cnd_time | vch 8 | null-ok |
| intro_time | num 6 | |
| period | vch 8 | |
| year discount | num 4 | |

| **BILLINGINFO** | | |
|---|---|---|
| billi_id | num 14 | |
| who_id | num 14 | |
| method | vch 12 | |
| credcard | num 16 | null-ok |
| expire | vch 7 | null-ok |
| card_id | num 14 | null-ok |
| billp_id | num 14 | |
| create_date | num 10 | |
| next_date | num 10 | |

| **USAGE_HIST** | |
|---|---|
| id | num 14 |
| objtype | vch 16 |
| access | vch 16 |
| start | num 10 |
| end | num 10 |
| cnt | num 12 |

| **IPV4RANGE** | |
|---|---|
| ipid | num 14 |
| flag | num 2 |
| bits | num 2 |
| low | num 10 |
| high | num 10 |

### DESIGN CHOICES

Probably the least obvious design choice is the way that CONTACT is laid out. What would be more obvious/natural is to have one table row represent each particular contact record. However, this design breaks contact information into multiple fields, and represents each field as a row in the database. This method is more flexible (given the flexible nature of the data), and supports the association and efficient lookup of "ACCESS POLICY" to individual fields (e.g., to allow random people looking at a CONTACT record to see an email address but not see a phone number associated with that record).

### THE SQL INTERFACE

The SQL Interface **104** takes queries/requests for domain name/address resolution and returns the appropriate address and other information. The SQL implementing the interface **104** in a preferred embodiment is listed below (in the Table titled SQL Query).

### EXAMPLE

Here is a sample query made by a user **108** of the DNS **100** according to the present invention. The request is processed by the query mechanism **106** which uses the SQL interface **104** to access the database **102**.

Query: a.b.c.d.wonk.com. <type>
where the system knows that it has "wonk.com. ZONE"

Then, in the worst case, the system has to make the following queries into the database **102:**
a.b.c.d.wonk.com. <type> ## commonly returns ANSWER
b.c.d.wonk.com. NS ## commonly returns AUTH data
a.b.c.d.wonk.com. NS ## common to indicate sub-delegation
*.b.c.d.wonk.com. <type>
b.c.d.wonk.com. NS
*.c.d.wonk.com. <type>
c.d.wonk.com. NS
*.d.wonk.com. <type>
d.wonk.com. NS
*.wonk.com. <type>

This invention embodies a query strategy that significantly reduces the average number of database queries required to complete a DNS query.

There are essentially two common cases:
(1) no sub-delegation-Query gets simple answer for foo.wonk.com
(2) the system will end-up telling about sub-delegation-Query made for a.b.c.d.wonk.com gets NS for d.wonk.com

In both of the common cases noted above, the answer "dname" is likely to be one component longer than the zone name. So, the system tests this before making the query (i.e., the system does not want to query for "a.b.c.d.wonk.com", "b.c.d.wonk.com", and "c.d.wonk.com" just to finally say that the delegation is made at "d.wonk.com").

Consequently, the following query optimization (in the query mechanism **106**) can be used:
If the requested name is one component longer than zone name, then look for a quick answer.

This can be written as:

```
    if (shorten(req.dname) == ZONE) {
        SQL(<req.dname>, <type> ##
    SQL (d.wonk. com, <type>,
        shorten (<req.dname>), NS) ##
    wonk.com, NS)
    if (<type> found)
        return_answer;
        save_NS_for_later () ;
    SQL (req.dname, NS,
       "*" + shorten(req.dname), <type>) ;
       if ("*" found, return answer and my NS
    records);
       if (NS found, return authority) ;
       return(NXDOMAIN);
    }
```

If long request name, check for shortest delegation first. For example, if the request name is "a.b.c.d.wonk.com", check if "d.wonk.com" has NS.

```
     SQL(shorten.to_one_piece(<req.dname>), NS); if (NS
 found) return;
     If neither optimization worked then start with original question.

    SQL(<req.name>, <type>,
         zone.name, NS);
    if (answer found) {
         return(answer + NS);
    } else {
         save_NS__for_later();
    }
    If no answer is found then loop through and look for NS delegations.

    for (working_name = req.dname,
         next_name = shorten(working_name);
         next != zone;
         working_name = next_name, next_name =
    shorten(working name)
    ) {
         SQL(working_name, NS);
         if (NS found) return;
    }
```

No delegation made.

Now loop looking for "*" records.

```
    for (working_name = shorten(req.dname),
         next_name = shorten(working_name);
         next != zone;
         working_name = next_name, next_name =
    shorten(working_name)
    ) {
         SQL("*" + working_name, <type>;
         if (<type> found) {
         return (answer + save_NS_records);
    }
    }
         return(NXDOMAIN);
```

### EXAMPLE

Give the example query "foo.bar.wonk.com. MX", call following SQL (Table XX) with following variables:
req.name1 = "foo.bar.wonk.com."
req.name2 = "*.bar.wonk.com."
req.name3 = "bar.wonk.com."
req.type = 15 (this is the MX type)
req.class = 1 (this is the IN class)
req. time = <current_time>
req.server = <server ID#>
req.ipaddr = <incoming pkt IP source>

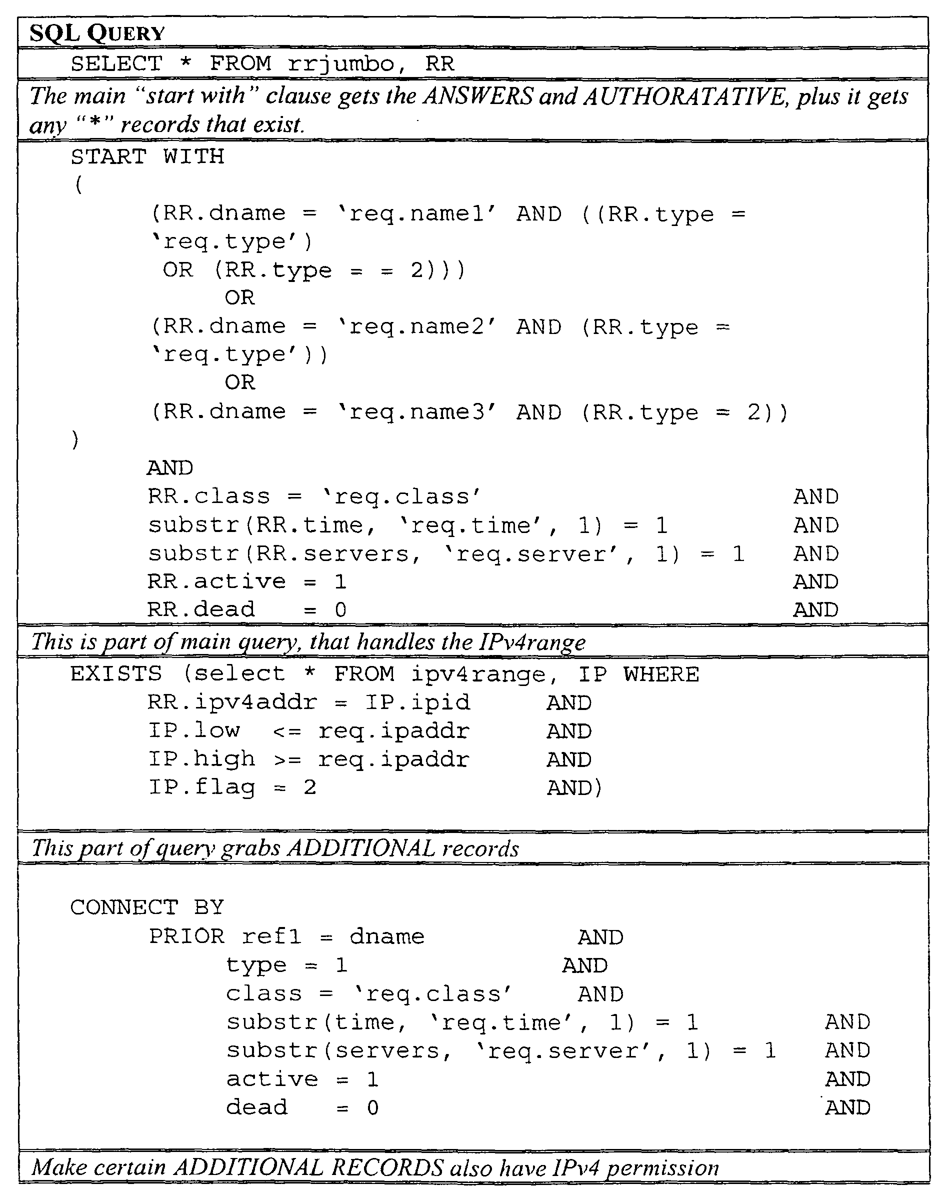

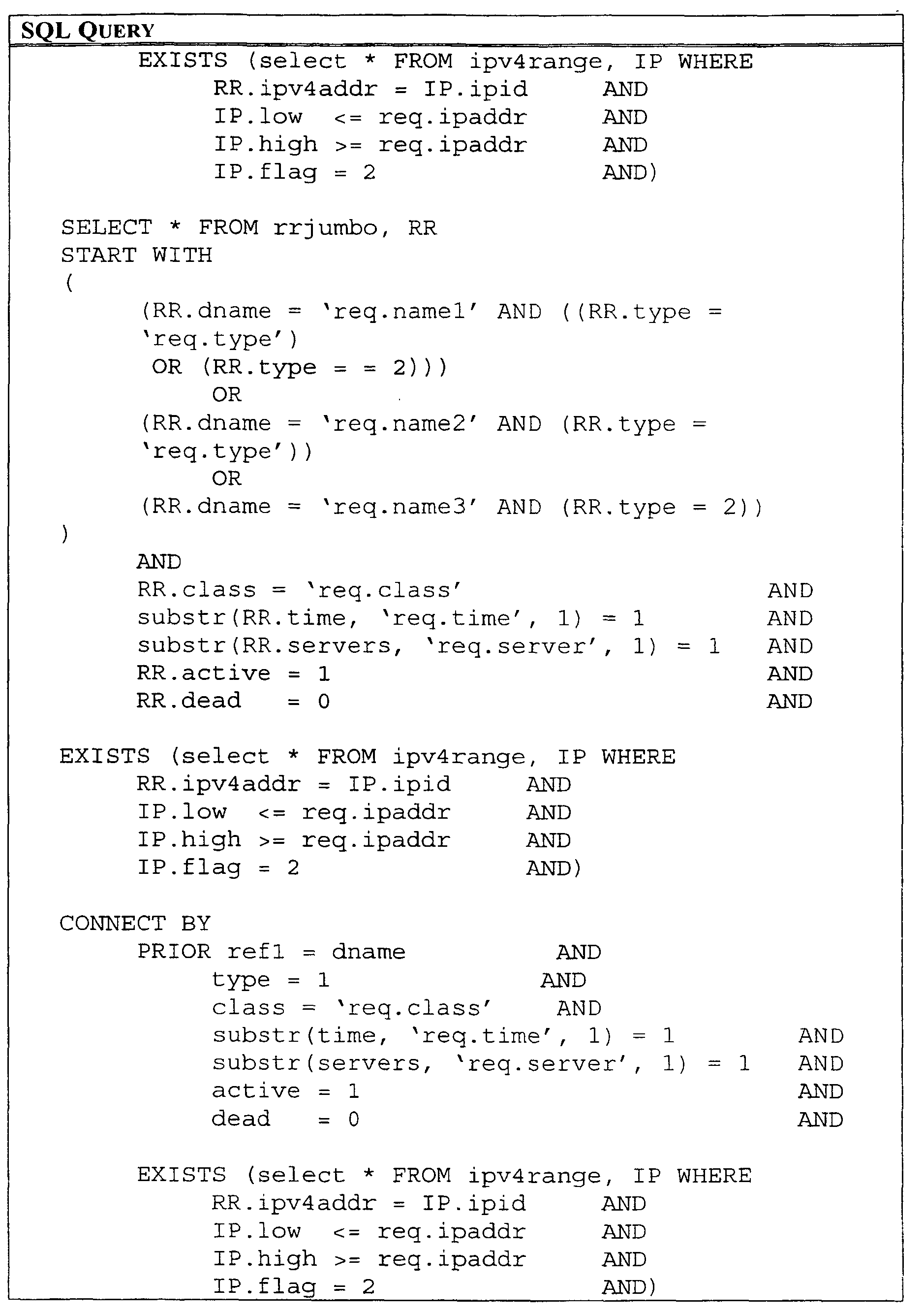

### OTHER FEATURES

Building a modular system has allowed additional mechanisms to be incorporated easily into the system which can serve as the base for new features/uses.

### CONFIGURABLE RESOURCE RECORD TYPES

The DNS according to some embodiments of the present invention has over thirty (30) defined resource record types, which provide data formats/fields for use by different applications; current implementations hard-code the type definitions. Thus, the present invention offers users the ability to dynamically configure RR types, to allow directory-enabled applications to be deployed and tested within short time frames.

### CONTEXT SENSITIVE (QUERY-SPECIFIC) ANSWERS

In the abstract, a directory service maps a query's incoming request (key) to an outgoing response (data indexed by the key). Using a relational database model gives the present invention an effective mechanism to add other components to the lookup key. In the DNS example, a different answer can be given depending on various context information: from the packet (IP address), from the machine (local time), and from global system (which server location). Thus, for example, the system may provide different answers at different times of day or to different geographic regions.

### DYNAMIC DATA CACHE

In some embodiments, the DNS server **100** incorporates a dynamic load-on-demand cache algorithm which significantly enhances performance by reducing the amount of data that must be retrieved from the database **102.**

When an inbound query is received, the server **100** will first attempt to find the answer in the data cache **110.** If the answer exists and is fresh, the response will be sent directly from the cached data stored in data cache **110.** If the answer exists in the cache **110** but is stale, or if the answer does not yet exist in the cache, the data will be acquired from the database **102,** transmitted in the response, and then added to or updated within the cache **110.** In some embodiments, the cache is maintained in a Most Recently Used order to optimize lookup times and facilitate cache management.

Items in the cache **110** have a maximum lifetime which ranges from the time to live (TTL) of the lowest resource record (RR) in the complete answer to the maximum cache time value configured for the server as a whole. For records that change frequently, the TTL value can be set to zero to ensure the data is never added to cache and always retrieved from the database.

By setting a relatively short lifetime on data in the cache **110,** the server **100** can provide maximum throughput while still offering near real-time propagation of zone changes. Because the cache is load-on-demand, the DNS daemon can be up and ready to respond to queries within moments of execution.

In addition to normal caching of DNS response data, the cache algorithm is designed so that negative caching is also achieved. For example, if a request is made for a host that does not exist in an active domain, the negative response will be saved just like a valid response. If the server is for some reason hit with a barrage of requests for this same invalid host, they can be filled using the negative response in cache, once again eliminating unnecessary calls to the database.

Further, in some embodiments, a management thread is incorporated into the cache design. This thread comes to life at a configurable interval and walks through the RR data cache, deleting any stale entries that it encounters. This feature ensures that the most active data is always the most readily available.

In some embodiments, a cache invalidation mechanism is incorporated that is responsible for removing (or modifying) data within the dynamic cache so that the cache accurately and acceptably reflects changes made to the primary data repository.

### IMPLEMENTATION DETAILS

An embodiment of this invention has been implemented. The DNS server **100** was designed on top of and tightly integrated with the database **102.** The database **102** was implemented using Oracle, however, care was taken to modularize the database interface so that the system could easily be integrated with a database from a different vendor, such as Sybase or Informix. The server was developed using Gnu C++ on a Linux platform. The server build process was later expanded to support both Linux and Solaris.

Implementations of the present invention can be written in any suitable high-level computer language. Further, while aspects of the present invention have been implemented in software running on a computer system as described above, all aspects of the present invention can also be implemented in hardware or in a combination of software and hardware. That is, although described with reference to a particular system, the present invention operates on any computer system and can be implemented in software, hardware or any combination thereof. When implemented fully or partially in software, the invention can reside, permanently or temporarily, on any memory or storage medium, including but not limited to a RAM, a ROM, a disk, an ASIC, a PROM and the like.

While the above embodiments relate to domain name processing, one skilled in the art will realize that domain names are merely one example of directory services, and that the present invention is applicable to other directory services.

Thus are provided methods, systems and devices for scalable domain name resolution. One skilled in the art will appreciate that the present invention can be practiced by other than the described embodiments, which are presented for purposes of illustration and not limitation, and the present invention is limited only by the claims that follow.

## Claims

1. A domain name resolution system, comprising one or more servers (100), each of the servers configured to resolve domain name resolution requests and including a routing mechanism reactive to a state of the server, each of the servers including a query mechanism (106), **characterized in that**:
the query mechanism comprises a compound database query and (106) is configured to obtain a group of records from a database (102) in response to the compound database query, such that the server (100) obtains the group of records at a data rate faster than the underlying data retrieval rate of the database (102).

2. A domain name resolution method, comprising: receiving a domain name resolution request at one or more servers (100); forming, using a query mechanism (106), at least one database query corresponding to the domain name resolution request; sending the at least one database query to a database (102); and obtaining from the database (102) a domain name resolution response, **characterised in that**:
at least one of said database queries is a compound .database query and the domain name resolution response to said compound database query includes a group of database records, wherein the records are received by the one or more servers (100) at a data rate faster than the underlying data retrieval rate of the database (102).

3. The system of claim 1, in which the query mechanism (106) is further configured to organize a sequence of multiple queries based on the records obtained using earlier queries.

4. The system of claim 3 in which the query mechanism (106) is further configured to organize the sequence of multiple queries by forming, for each domain name resolution request, at least one query based on common case optimisation, wherein the test for each query is made to be a separate code segment; and to execute the at least one query based on common case optimisation prior to any other query.

5. The system of claim 4, in which the records are maintained according to a plurality of domain name zones, and the query mechanism (106) is further configured to optimize a sequence of the queries based on common case optimisation in accordance with statistics maintained for each zone.

6. The system of claim 1, wherein the query mechanism (106) is configured such that the compound database query obtains from the database (102) all records required to construct a domain name resolution response.

7. The system of claim 6, in which the query mechanism (106) is configured such that the compound database query retrieves combinations of answer, authority and additional records from the database (102).

8. The system of claim 7, in which the query mechanism (106) is configured such that the compound database query retrieves available CNAME records from the database (102).

9. The system of claim 4, in which the query mechanism (106) is configured such that the at least one query based on common case optimisation is based on the outcome probabilities for the domain name resolution request.

10. The system of claim 1, wherein the records obtained from the database (102) include an Internet Protocol address corresponding to the domain name resolution request.

11. The system of claim 1, in which the routing mechanism is adapted to route domain name resolution requests to the nearest server based on user proximity information.

12. The system of claim 1, in which the routing mechanism is adapted to monitor each server and withdraws routes to servers (100) that do not respond to domain name resolution requests.

13. The system of claim 1, wherein the query mechanism (106) is constructed and adapted to:
receive a user request for an IP address corresponding to a domain name;
construct each compound database query based on common case optimization to retrieve the answer, wherein the test for each query is made to be a separate code segment, wherein the compound database query based on common case optimisation is executed prior to any other query; and provide the answer by querying the database (102) using the compound database query, the answer containing at least one IP address corresponding to the domain name and other relevant information.

14. The method of claim 2, wherein the domain name resolution request is for an Internet Protocol IP address of one of a plurality of devices on the Internet, and the forming of the at least one database query includes:
constructing each compound database query with respect to the authoritative name server based on common case optimisation to retrieve the answer, and
providing the answer by querying the authoritative name server using the compound database query, the answer containing at least one IP address corresponding to the domain name and other relevant information.

15. The system according to claim 13, wherein the query mechanism (106) is further configured to:
select, if the domain name is one label longer than that of the name of the zone for which a first name server (100) that receives the request is responsible, the first name server (100) representing the zone as the authoritative name server (100);
select, if no answer is obtained for the first name server (100) representing the zone, a second name server (100) that has been delegated for the next level domain name relative to the zone as the authoritative name server (100); and
select, if no answer is obtained for the second name server (100), the authoritative name server by recursively searching the authoritative name server (100) with respect to the domain name until the answer is found.

16. The system according to claim 13, wherein to provide the answer, the query mechanism (106) is further configured to:
query the authoritative name server (100) using the compound database query;
receive the query result from the authoritative name server (100); and
derive the answer from the query result.

17. The system according to claim 16, further comprising a cache (110) wherein the query mechanism (106) is constructed and adapted to perform the query by attempting first to retrieve the query result from the cache (110).

18. The system according to claim 17, wherein the query mechanism (106) is adapted to identify the query result in the cache (110); and processes the query result.

19. The system according to claim 18, wherein the query mechanism (106) is adapted to process the query result by:
if the query result is fresh, sending the query result directly from the cache (110); and
if the query result either is stale or does not exist in the cache (110), then retrieving the query result from a database (102), sending the query result, and updating the cache (110) to reflect the retrieved query result.

20. The system according to claim 19, wherein items in the cache (110) include individual records or aggregated records.

21. The system according to claim 20, wherein each record in the cache (110) corresponds to either:
a positive record representing a positive query result wherein a request is made for a host that exists in an active domain; or
a negative record representing a negative query result wherein a request is made for
a host that does not exist in an active domain.

22. The system according to claim 21, wherein each record in the cache (110) has a maximum lifetime, ranging from the time to live for the lowest resource record in a complete answer to a maximum cache time value, used to evaluate whether each record is stale.

23. The system according to claim 22, wherein the query mechanism (106) is further constructed and adapted to retrieve, when the query result is not found in the cache (110), the query result from a database (102) of the authoritative name server.

24. The method of claim 2, further comprising:
organising a sequence of multiple queries based on the records obtained using earlier queries.

25. The method of claim 24, wherein the organising comprises:
forming, for each domain name resolution request, at least one query based on common case optimisation, wherein the test for each query is made to be a separate code segment; and executing the at least one query based on common case optimisation prior to any other query.

26. The method of claim 25, wherein the records are maintained according to a plurality of domain name zones, and wherein the at least one query based on common case optimisation is based on statistics maintained for each zone.

27. The method of claim 2, wherein the compound database query obtains from the database (102) all records required to construct a domain name resolution response.

28. The method of claim 27, wherein the compound database query retrieves combinations of answer, authority and additional records from the database (102).

29. The method of claim 28, wherein the compound database query retrieves available CNAME records from the database (102).

30. The method of claim 25, wherein the at least one query based on common case optimisation is based on the outcome probabilities for the domain name resolution request.

31. The method according to claim 14, wherein the providing of the answer comprises:
selecting, if the domain name is one label longer than that of the name of the zone for which a first name server (100) that receives the request is responsible, the first name server (100) representing the zone as the authoritative name server (100);
selecting, if no answer is obtained for the first name server (100) representing the zone, a second name server (100) that has been delegated for the next level domain name relative to the zone as the authoritative name server (100); and
selecting, if no answer is obtained for the second name server (100), the authoritative name server by recursively searching the authoritative name server (100) with respect to the domain name until the answer is found.

32. The method according to claim 14, wherein the providing of the answer comprises:
querying the authoritative name server (100) using the compound database query;
receiving a query result from the authoritative name server (100); and
deriving the answer from the query result.

## Patentansprüche

1. Domänennamen-Auflösungssystem mit einem oder mehreren Servern (100), wobei jeder der Server dafür ausgelegt ist, Domänennamen-Auflösungsanforderungen aufzulösen, und mit einem auf einen Zustand des Servers reagierenden Routing-Mechanismus, wobei jeder Server einen Anfragemechanismus (106) enthält, **dadurch gekennzeichnet, daß**
der Anfragemechanismus eine zusammengesetzte Datenbankanfrage umfaßt und (106) dafür ausgelegt ist, als Reaktion auf die zusammengesetzte Datenbankanfrage eine Gruppe von Datensätzen aus einer Datenbank (102) zu erhalten, dergestalt, daß der Server (100) die Gruppe von Datensätzen mit einer Datenrate erhält, die schneller als die zugrundeliegende Datenabrufrate der Datenbank (102) ist.

2. Domänennamen-Auflösungsverfahren, mit den folgenden Schritten:
Empfangen einer Domänennamen-Auflösungsanforderung in einem oder mehreren Servern (100); Bilden, unter Verwendung eines Anfragemechanismus (106), mindestens einer Datenbankanfrage entsprechend der Domänennamen-Auflösungsanforderung; Senden der mindestens einen Datenbankanfrage zu einer Datenbank (102); und Erhalten einer Domänennamen-Auflösungsantwort von der Datenbank (102), **dadurch gekennzeichnet, daß**:
mindestens eine der Datenbankanfragen eine zusammengesetzte Datenbankanfrage ist und die Domänennamen-Auflösungsantwort auf die zusammengesetzte Datenbankanfrage eine Gruppe von Datenbankdatensätzen umfaßt, wobei der eine bzw. die mehreren Server (100) die Datensätze mit einer Datenrate empfangen, die schneller als die zugrundeliegende Datenabrufrate der Datenbank (102) ist.

3. System nach Anspruch 1, bei dem der Anfragemechanismus (106) ferner dafür ausgelegt ist, auf der Basis der unter Verwendung früherer Anfragen erhaltenen Datensätze eine Sequenz mehrerer Anfragen zu organisieren.

4. System nach Anspruch 3, bei dem der Anfragemechanismus (106) ferner dafür ausgelegt ist, die Sequenz mehrerer Anfragen zu organisieren, indem für jede Domänennamen-Auflösungsanforderung mindestens eine Anfrage auf der Basis von Common-Case-Optimierung gebildet wird, wobei der Test für jede Anfrage als ein separates Codesegment aus.gelegt wird; und die mindestens eine Anfrage auf der Basis von Common-Case-Optimierung vor jeder anderen Anfrage ausgeführt wird.

5. System nach Anspruch 4, bei dem die Datensätze gemäß einer Vielzahl von Domänennamenzonen geführt werden und der Anfragemechanismus (106) ferner dafür ausgelegt ist, eine Sequenz der Anfragen auf der Basis von Common-Case-Optimierung gemäß für jede Zone geführten Statistiken zu optimieren.

6. System nach Anspruch 1, wobei der Anfragemechanismus (106) so ausgelegt ist, daß die zusammengesetzte Datenbankanfrage von der Datenbank (102) alle Datensätze erhält, die erforderlich sind, um eine Domänennamen-Auflösungsantwort zu konstruieren.

7. System nach Anspruch 6, bei dem der Anfragemechanismus (106) so ausgelegt ist, daß die zusammengesetzte Datenbankanfrage Kombinationen von Antwort-, Autoriäts- und zusätzlichen Datensätzen aus der Datenbank (102) abruft.

8. System nach Anspruch 7, bei dem der Anfragemechanismus (106) so ausgelegt ist, daß die zusammengesetzte Datenbankanfrage verfügbare CNAME-Datensätze aus der Datenbank (102) abruft.

9. System nach Anspruch 4, bei dem der Anfragemechanismus (106) so ausgelegt ist, daß die mindestens eine auf Common-Case-Optimierung basierende Anfrage auf den Ausgangswahrscheinlichkeiten für die Domänennamen-Auflösungsanforderung basiert.

10. System nach Anspruch 1, wobei die aus der Datenbank (102) erhaltenen Datensätze eine der Domänennamen-Auflösungsanforderung entsprechende Internet-Protokoll-Adresse enthalten.

11. System nach Anspruch 1, bei dem der Routing-Mechanismus dafür ausgelegt ist, Domänennamen-Auflösungsanforderungen auf der Basis von Benutzerproximitätsinformationen zu dem nächsten Server zu routen.

12. System nach Anspruch 1, bei dem der Routingmechanismus dafür ausgelegt ist, jeden Server zu überwachen und Routen zu Servern (100), die nicht auf Domänennamen-Auflösungsanforderungen reagieren, zurücknimmt.

13. System nach Anspruch 1, bei dem der Anfragemechanismus (106) für folgendes konstruiert und ausgelegt ist:
Empfangen einer Benutzeranforderung für eine IP-Adresse, die einem Domänennamen entspricht;
Konstruieren jeder zusammengesetzten Datenbankanfrage auf der Basis von Common-Case-Optimierung, um die Antwort abzurufen, wobei der Test für jede Anfrage als ein separates Codesegment ausgelegt wird, wobei die zusammengesetzte Datenbankanfrage auf der Basis von Common-Case-Optimierung vor jeder anderen Anfrage ausgeführt wird; und Geben der Antwort durch Anfragen bei der Datenbank (102) unter Verwendung der zusammengesetzten Datenbankanfrage, wobei die Antwort mindestens eine dem Domänennamen entsprechende IP-Adresse und andere relevante Informationen enthält.

14. Verfahren nach Anspruch 2, wobei die Domänennamen-Auflösungsanforderung für eine Adresse des Internet-Protokolls IP einer einer Vielzahl von Einrichtungen im Internet bestimmt ist und das Bilden der mindestens einen Datenbankanfrage folgendes umfaßt:
Konstruieren jeder zusammengesetzten Datenbankanfrage in Bezug auf den maßgeblichen Namenserver auf der Basis von Common-Case-Optimierung, um die Antwort abzurufen, und
Geben der Antwort durch Befragen des maßgeblichen Namenservers unter Verwendung der zusammengesetzten Datenbankanfrage, wobei die Antwort mindestens eine dem Domänennamen entsprechende IP-Adresse und andere relevante Informationen enthält.

15. System nach Anspruch 13, wobei der Anfragemechanismus (106) ferner für folgendes konfiguriert ist:
wenn der Domänenname ein Label länger als der des Namens der Zone ist, für die ein erster Namenserver (100), der die Anforderung empfängt, verantwortlich ist, Auswählen des ersten Namenservers (100), der die Zone repräsentiert, als den maßgeblichen Namenserver (100);
wenn keine Antwort für den die Zone repräsentierenden ersten Namenserver (100) erhalten wird, Auswählen eines zweiten Namenservers (100), der für den Domänennamen der nächsten Ebene relativ zu der Zone als der maßgebliche Namenserver (100) delegiert wurde; und
wenn keine Antwort für den zweiten Namenserver (100) erhalten wird, Auswählen des maßgeblichen Namenservers durch rekursives Durchsuchen des maßgeblichen Namenservers (100) in Bezug auf den Domänennamen bis die Antwort gefunden ist.

16. System nach Anspruch 13, wobei der Anfragemechanismus (106), um die Antwort zu geben, ferner für folgendes ausgelegt ist:
Befragen des maßgeblichen Namenservers (100) unter Verwendung der zusammengesetzten Datenbankanfrage;
Empfangen des Anfrageergebnisses von dem maßgeblichen Namenserver (100); und
Ableiten der Antwort aus dem Anfrageergebnis.

17. System nach Anspruch 16, ferner mit einem Cache (110), wobei der Anfragemechanismus (106) dafür konstruiert und ausgelegt ist, die Anfrage durchzuführen, indem zuerst versucht wird, das Anfrageergebnis aus dem Cache (110) abzurufen.

18. System nach Anspruch 17, wobei der Anfragemechanismus (106) dafür ausgelegt ist, das Anfrageergebnis in dem Cache (110) zu identifizieren; und das Anfrageergebnis verarbeitet.

19. System nach Anspruch 18, wobei der Anfragemechanismus (106) dafür ausgelegt ist, das Anfrageergebnis durch folgendes zu verarbeiten:
wenn das Anfrageergebnis frisch ist, Senden des Anfrageergebnisses direkt aus dem Cache (110); und
wenn das Anfrageergebnis entweder veraltet ist oder nicht in dem Cache (110) existiert, Abrufen des Anfrageergebnisses aus einer Datenbank (102), Senden des Anfrageergebnisses und Aktualisieren des Cache (110), um das abgerufene Anfrageergebnis widerzuspiegeln.

20. System nach Anspruch 19, wobei Posten in dem Cache (110) individuelle Datensätze oder aggregierte Datensätze umfassen.

21. System nach Anspruch 20, wobei jeder Datensatz in dem Cache (110) folgendem entspricht:
entweder einem positiven Datensatz, der ein positives Anfrageergebnis repräsentiert, wobei eine Anforderung für einen Host erfolgt, der in einer aktiven Domäne existiert; oder
einem negativen Datensatz, der ein negatives Anfrageergebnis repräsentiert, wobei eine Anforderung für einen Host erfolgt, der nicht in einer aktiven Domäne exitiert.

22. System nach Anspruch 21, wobei jeder Datensatz in dem Cache (110) eine maximale Lebensdauer aufweist, die von der Lebenszeit für den niedrigsten Ressourcendatensatz in einer vollständigen Antwort bis zu einem maximalen Cache-Zeitwert reicht, womit ausgewertet wird, ob jeder Datensatz veraltert ist.

23. System nach Anspruch 22, wobei der Anfragemechanismus (106) ferner dafür konstruiert und ausgelegt ist, das Anfrageergebnis aus einer Datenbank (102) des maßgeblichen Namenservers abzurufen, wenn das Anfrageergebnis nicht in dem Cache (110) gefunden wird.

24. Verfahren nach Anspruch 2, ferner umfassend:
Organisieren einer Sequenz mehrerer Anfragen auf der Basis der unter Verwendung früherer Anfragen erhaltenen Datensätze.

25. Verfahren nach Anspruch 24, wobei das Organisieren folgendes umfaßt:
für jede Domänennamen-Auflösungsanforderung, Bilden mindestens einer Anfrage auf der Basis von Common-Case-Optimierung, wobei der Test für jede Anfrage als separates Codesegment ausgelegt wird; und Ausführen der mindestens einen Anfrage auf der Basis von Common-Case-Optimierung vor jeder anderen Anfrage.

26. Verfahren nach Anspruch 25, wobei die Datensätze gemäß einer Vielzahl von Domänennamenzonen geführt werden und wobei die mindestens eine auf Common-Case-Optimierung basierende Anfrage auf für jede Zone geführten Statistiken basiert.

27. Verfahren nach Anspruch 2, wobei die zusammengesetzte Datenbankanfrage von der Datenbank (102) alle Datensätze erhält, die erforderlich sind, um eine Domänennamen-Auflösungsantwort zu konstruieren.

28. Verfahren nach Anspruch 27, wobei die zusammengesetzte Datenbankanfrage Kombinationen von Antwort, Autoritäts- und zusätzlichen Datensätzen von der Datenbank (102) abruft.

29. Verfahren nach Anspruch 28, wobei die zusammengesetzte Datenbankanfrage verfügbare CNAME-Datensätze aus der Datenbank (102) abruft.

30. Verfahren nach Anspruch 25, wobei die mindestens eine Anfrage auf der Basis von Common-Case-Optimierung auf den Ausgangswahrscheinlichkeiten für die Domänennamen-Auflösungsanforderung basiert.

31. Verfahren nach Anspruch 14, wobei das Geben der Antwort folgendes umfaßt:
wenn der Domänenname ein Label länger als der des Namens der Zone ist, für die ein erster Namenserver (100), der die Anforderung empfängt, verantwortlich ist, Auswählen des ersten Namenservers (100), der die Zone repräsentiert, als den maßgeblichen Namenserver (100);
wenn keine Antwort für den die Zone repräsentierenden ersten Namenserver (100) erhalten wird, Auswählen eines zweiten Namenservers (100), der für den Domänennamen der nächsten Ebene relativ zu der Zone als der maßgebliche Namenserver (100) delegiert wurde; und
wenn keine Antwort für den zweiten Namenserver (100) erhalten wird, Auswählen des maßgeblichen Namenservers durch rekursives Durchsuchen des maßgeblichen Namenservers (100) in Bezug auf den Domänennamen bis die Antwort gefunden ist.

32. Verfahren nach Anspruch 14, wobei das Geben der Antwort folgendes umfaßt:
Befragen des maßgeblichen Namenservers (100) unter Verwendung der zusammengesetzten Datenbankanfrage;
Empfangen des Anfrageergebnisses von dem maßgeblichen Namenserver (100); und
Ableiten der Antwort aus dem Anfrageergebnis.

## Revendications

1. Système de résolution de noms de domaines, comportant un ou plusieurs serveurs (100), chacun des serveurs étant configuré en vue de résoudre des demandes de résolution de noms de domaines et comprenant un mécanisme de routage susceptible de réagir à l'état d'un serveur, chacun des serveurs comprenant un mécanisme (106) de requête, **caractérisé en ce que** :
le mécanisme (106) de requête comporte une requête complexe de base de données et est configuré en vue d'obtenir un groupe d'enregistrements issus d'une base de données (102) en réaction à la requête complexe de base de données, de telle sorte que le serveur (100) obtienne un groupe d'enregistrements à un débit de données supérieur au débit sous-jacent de récupération de données de la base de données (102).

2. Procédé de résolution de noms de domaines, comportant les étapes consistant à : recevoir une demande de résolution de nom de domaine au niveau d'un ou de plusieurs serveurs (100) ; former, à l'aide d'un mécanisme (106) de requête, au moins une requête de base de données correspondant à la demande de résolution de nom de domaine ; envoyer la ou les requêtes de base de données à une base de données (102) ; et obtenir de la base de données (102) une réaction de résolution de nom de domaine, **caractérisé en ce que** :
au moins une desdites requêtes de base de données est une requête complexe de base de données et la réaction de résolution de nom de domaine à ladite requête complexe de base de données comprend un groupe d'enregistrements de base de données, les enregistrements étant reçus par le ou les serveurs (100) à un débit de données supérieur au débit sous-jacent de récupération de données de la base de données (102).

3. Système selon la revendication 1, dans lequel le mécanisme (106) de requête est en outre configuré en vue d'organiser une suite de requêtes multiples sur la base des enregistrements obtenus à l'aide de requêtes antérieures.

4. Système selon la revendication 3, dans lequel le mécanisme (106) de requête est en outre configuré en vue d'organiser la suite de requêtes multiples en formant, pour chaque demande de résolution de nom de domaine, au moins une requête basée sur une optimisation de cas courant, et en faisant en sorte que le test pour chaque requête soit un segment de code séparé ; et en vue d'exécuter la ou les requêtes basées sur une optimisation de cas courant avant toute autre requête.

5. Système selon la revendication 4, dans lequel les enregistrements sont conservés selon une pluralité de zones de noms de domaines et le mécanisme (106) de requête est en outre configuré en vue d'optimiser une suite des requêtes basées sur une optimisation de cas courant en fonction de statistiques tenues pour chaque zone.

6. Système selon la revendication 1, le mécanisme (106) de requête étant configuré de telle sorte que la requête complexe de base de données obtienne de la base de données (102) tous les enregistrements nécessaires pour construire une réaction de résolution de nom de domaine.

7. Système selon la revendication 6, dans lequel le mécanisme (106) de requête est configuré de telle sorte que la requête complexe de base de données récupère à partir de la base de données (102) des combinaisons d'enregistrements de réponse, d'autorité et supplémentaires.

8. Système selon la revendication 7, dans lequel le mécanisme (106) de requête est configuré de telle sorte que la requête complexe de base de données récupère à partir de la base de données (102) les enregistrements CNAME disponibles.

9. Système selon la revendication 4, dans lequel le mécanisme (106) de requête est configuré de telle sorte que la ou les requêtes basées sur une optimisation de cas courant soient basées sur les possibilités de résultat de la demande de résolution de nom de domaine.

10. Système selon la revendication 1, les enregistrements obtenus de la base de données (102) comprenant une adresse de protocole Internet correspondant à la demande de résolution de nom de domaine.

11. Système selon la revendication 1, dans lequel le mécanisme de routage est prévu pour acheminer les demandes de résolution de noms de domaines vers le serveur le plus proche sur la base d'informations de proximité de l'utilisateur.

12. Système selon la revendication 1, dans lequel le mécanisme de routage est prévu pour contrôler chaque serveur et retirer les routes vers des serveurs (100) qui ne réagissent pas à des demandes de résolution de noms de domaines.

13. Système selon la revendication 1, le mécanisme (106) de requête étant construit et prévu pour :
recevoir une demande d'utilisateur pour une adresse IP correspondant à un nom de domaine ;
construire chaque requête complexe de base de données basée sur une optimisation de cas courant en vue de récupérer la réponse, en faisant en sorte que le test pour chaque requête soit un segment de code séparé, la requête complexe de base de données basée sur une optimisation de cas courant étant exécutée avant toute autre requête ; et fournir la réponse en interrogeant la base de données (102) à l'aide de la requête complexe de base de données, la réponse contenant au moins une adresse IP correspondant au nom de domaine et d'autres informations pertinentes.

14. Procédé selon la revendication 2, la demande de résolution de nom de domaine portant sur une adresse IP de protocole Internet d'un dispositif parmi une pluralité de dispositifs sur Internet et la formation de la ou des requêtes de base de données comprenant les étapes consistant à :
construire chaque requête complexe de base de données par rapport au serveur de noms faisant autorité sur la base d'une optimisation de cas courant afin de récupérer la réponse, et à
fournir la réponse en interrogeant le serveur de noms faisant autorité à l'aide de la requête complexe de base de données, la réponse contenant au moins une adresse IP correspondant au nom de domaine et d'autres informations pertinentes.

15. Système selon la revendication 13, le mécanisme (106) de requête étant en outre configuré en vue de :
sélectionner, si le nom de domaine est plus long d'une étiquette que le nom de la zone dont est responsable un premier serveur (100) de noms qui reçoit la demande, le premier serveur (100) de noms représentant la zone en tant que serveur de noms (100) faisant autorité ;
si aucune réponse n'est obtenue pour le premier serveur (100) de noms représentant la zone, sélectionner en tant que serveur (100) de noms faisant autorité un deuxième serveur (100) de noms qui a reçu délégation pour le nom de domaine du niveau suivant par rapport à la zone ; et
si aucune réponse n'est obtenue pour le deuxième serveur (100) de noms, sélectionner le serveur (100) de noms faisant autorité en recherchant de façon récursive le serveur (100) de noms faisant autorité par rapport au nom de domaine jusqu'à ce que la réponse soit trouvée.

16. Système selon la revendication 13, le mécanisme (106) de requête étant en outre, afin de fournir la réponse, configuré en vue :
d'interroger le serveur (100) de noms faisant autorité à l'aide de la requête complexe de base de données ;
de recevoir du serveur (100) de noms faisant autorité le résultat de la requête ; et
d'élaborer la réponse à partir du résultat de la requête.

17. Système selon la revendication 16, comportant en outre un cache (110), le mécanisme (106) de requête étant construit et prévu pour effectuer la requête en tentant d'abord de récupérer le résultat de la requête à partir du cache (110).

18. Système selon la revendication 17, le mécanisme (106) de requête étant prévu pour :
identifier le résultat de la requête dans le cache (110) ; et traiter le résultat de la requête.

19. Système selon la revendication 18, le mécanisme (106) de requête étant prévu pour traiter le résultat de la requête :
si le résultat de la requête est récent, en envoyant le résultat de la requête directement à partir du cache (110) ; et
si le résultat de la requête est soit périmé, soit inexistant dans le cache (110), en récupérant le résultat de la requête à partir d'une base de données (102), en envoyant le résultat de la requête et en mettant à jour le cache (110) pour refléter le résultat de requête récupéré.

20. Système selon la revendication 19, les éléments présents dans le cache (110) comprenant des enregistrements individuels ou des enregistrements agrégés.

21. Système selon la revendication 20, chaque enregistrement présent dans le cache (110) correspondant :
soit à un enregistrement positif représentant un résultat positif de la requête, une requête étant émise pour un hôte qui existe dans un domaine actif ;
soit à un enregistrement négatif représentant un résultat négatif de la requête, une requête étant émise pour un hôte qui n'existe pas dans un domaine actif.

22. Système selon la revendication 21, chaque enregistrement présent dans le cache (110) étant doté d'une durée de vie maximale, allant de la durée de vie de l'enregistrement de ressource le plus bas d'une réponse complète à une valeur de durée maximale dans le cache, utilisée pour déterminer si chaque enregistrement est périmé.

23. Système selon la revendication 22, le mécanisme (106) de requête étant en outre construit et prévu pour récupérer, lorsque le résultat de la requête n'est pas trouvé dans le cache (110), le résultat de la requête à partir d'une base de données (102) du serveur de noms faisant autorité.

24. Procédé selon la revendication 2, comportant en outre l'étape consistant à:
organiser une suite de requêtes multiples sur la base des enregistrements obtenus à l'aide de requêtes antérieures.

25. Procédé selon la revendication 24, l'organisation comportant les étapes consistant à :
former, pour chaque demande de résolution de nom de domaine, au moins une requête basée sur une optimisation de cas courant en faisant en sorte que le test pour chaque requête soit un segment de code séparé ; et exécuter la ou les requêtes basées sur une optimisation de cas courant avant toute autre requête.

26. Procédé selon la revendication 25, les enregistrements étant conservés selon une pluralité de zones de noms de domaines et la ou les requêtes basées sur une optimisation de cas courant étant basées sur des statistiques tenues pour chaque zone.

27. Procédé selon la revendication 2, la requête complexe de base de données obtenant de la base de données (102) tous les enregistrements nécessaires pour construire une réaction de résolution de nom de domaine.

28. Procédé selon la revendication 27, la requête complexe de base de données récupérant à partir de la base de données (102) des combinaisons d'enregistrements de réponse, d'autorité et supplémentaires.

29. Procédé selon la revendication 28, la requête complexe de base de données récupérant à partir de la base de données (102) les enregistrements CNAME disponibles.

30. Procédé selon la revendication 25, la ou les requêtes basées sur une optimisation de cas courant étant basées sur les possibilités de résultat de la demande de résolution de nom de domaine.

31. Procédé selon la revendication 14, la fourniture de la réponse comportant les étapes consistant à :
sélectionner, si le nom de domaine est plus long d'une étiquette que le nom de la zone dont est responsable un premier serveur (100) de noms qui reçoit la demande, le premier serveur (100) de noms représentant la zone en tant que serveur de noms (100) faisant autorité ;
si aucune réponse n'est obtenue pour le premier serveur (100) de noms représentant la zone, sélectionner en tant que serveur (100) de noms faisant autorité un deuxième serveur (100) de noms qui a reçu délégation pour le nom de domaine du niveau suivant par rapport à la zone ; et
si aucune réponse n'est obtenue pour le deuxième serveur (100) de noms, sélectionner le serveur de noms faisant autorité en recherchant de façon récursive le serveur (100) de noms faisant autorité par rapport au nom de domaine jusqu'à ce que la réponse soit trouvée.

32. Procédé selon la revendication 14, la fourniture de la réponse comportant les étapes consistant à :
interroger le serveur (100) de noms faisant autorité à l'aide de la requête complexe de base de données ;
recevoir du serveur (100) de noms faisant autorité un résultat de requête ; et
élaborer la réponse à partir du résultat de la requête.
